## Europäisches Patentamt
## European Patent Office
## Office européen des brevets

(11) Publication number: **0 151 966**
**B1**

(12)

# EUROPEAN PATENT SPECIFICATION

(45) Date of publication of patent specification: **24.01.90**

(51) Int. Cl.⁵: **B 60 C 11/04, B 60 C 11/11**

(21) Application number: **85100596.7**

(22) Date of filing: **21.01.85**

(54) Directional tyres for autombiles.

(30) Priority: **10.02.84 IT 1955784**

(43) Date of publication of application:
**21.08.85 Bulletin 85/34**

(45) Publication of the grant of the patent:
**24.01.90 Bulletin 90/04**

(84) Designated Contracting States:
**BE DE FR GB LU NL**

(56) References cited:
**EP-A-0 064 934**
**GB-A-2 046 188**
**US-A-2 770 279**
**US-A-4 351 381**

**GUMMIBEREIFUNG, vol. 51, no. 9, 1975, page 33, Bielefeld, DE; "Reifen mit VIP-Charakter"**

(73) Proprietor: **PIRELLI COORDINAMENTO PNEUMATICI Società per Azioni**
**Piazzale Cadorna, 5**
**I-20123 Milan (IT)**

(72) Inventor: **Semin, Fikret**
**Piazza Napoli, 38**
**Milan (IT)**
Inventor: **Guermandi, Romano**
**Via Monte San Genesio N. 27**
**Milan (IT)**
Inventor: **Cucco, Gian Carlo**
**Via Galvani, 1**
**Villa Cortese Milan (IT)**

Courier Press, Leamington Spa, England.

## Description

The present invention regards automobile tyres and in particular, it concerns the raised design—better known as the tread-pattern, with which the outer surface portion that comes into ground-contact, is provided.

As already known, automobile tyres present their crown portion, which extends axially from one sidewall to the next, as being provided with a thick elastomer layer—known as a tread-band, having variously disposed grooves made in it, in such a way as to subdivide said band into ribs and/or blocks that are separated one from the other by said grooves. Said ribs and said blocks are generally also provided with sipes i.e. with narrow cuts—directed radially from the surface of the tread-band towards the tyre interior, which have a variable depth and which can also open-out upon the sides of the ribs and the blocks.

In fact, the whole assembly of grooves and sipes, constitutes the tread-pattern—which forms a characteristic and distinctive element of the tyre and which, above all, is variable depending upon the type of usage to which the tyre is subjected.

For example, those tyres that require good non-skidding endowments—since they are destined for being used on snow covered and miry ground or on rugged terrain, present tread-patterns that are heavily 'blocked' with wide and deep cutouts and grooves and by rather massive blocks; while the tyres that are usually destined for use on roads in a good state, are normally distinguishable by their big circumferential grooves, usually having a zig-zag configuration, from which their branch out very narrow transversal sipes which, at times, extend till the entire rib-width, with generally having a tortuous configuration. In fact, the main purpose of these tread-patterns is to break the liquid film that is created between tyre and road, under wet road conditions, with thus minimizing the negative 'aquaplane phenomena' and moreover, with guaranteeing a high degree of steerage capacity, driving stability and road holding behaviour.

For those tyres destined for equipping the sports-class type of cars—i.e. the tyres, destined for usage on roads that are generally in a good state, but which have to undergo critical exercise conditions owing to the great accelerations and high speeds involved, even in cornering, it has recently been found quite convenient to employ tread-patterns constituted by a plurality of blocks disposed in circumferential rows that are separated one from the other by circumferential rectilineal grooves and by obliquely disposed transversal grooves, in such a way that the blocks have a substantially rhomboidal form—i.e. the opposite sides substantially parallel to each other, and the two consecutive sides, of substantially different lengths, being inclined one with respect to other, at an angle having a value diverse to 90°.

In the old tread-patterns, the transversal grooves that—along with the longitudinal grooves defined the blocks had an inclination which was contrary (with respect to the circumferential direction of the tyre) to that of the adjacent rows. Successively, these grooves were disposed so as to all be oriented in the same sense, with respect to said circumferential direction. Nevertheless, in the more recent tyres, it proved to be more convenient to dispose said transversal grooves in a herring-bone pattern—i.e. inclined in such a manner as to have them all converging in the same direction towards the equatorial-plane of the tyre. Hence, with having the inclination of these grooves in the opposite sense to one another, as regards the tyre's circumferential direction, in the two tread-band portions flanking said equatorial-plane.

Hence, a series of changes have been made in the tread pattern—with finally realizing the so-called "directional" type of tread—i.e. a pattern substantially symmetrical with respect to the equatorial plane, but asymmetrical with respect to any whatsoever axial plane, for which reason the tyre's contact area upon the ground changes, on inverting the sense of rotation of the wheel.

Therefore, said tyres present a preferential sense of rotation, that is usually indicated by stamping a special reference mark—an arrow, for example, on the tyre's sidewall.

Owing to this preferential direction of rotation, these tyres can give a positive or negative performance—in terms of their directional stability and their resistance to the aquaplane phenomena, depending upon their direction of rotation.

Apart from this, owing to the increased demands for a better performance from this type of tyres and this type of cars, the traditional tread-patterns have also shown to be strongly sensitive to any sort of exercise that only involves extreme conditions of usage and which just involves those blocks disposed on one side of the equatorial plane and just a certain portion of each block—with compromising, in said manner, a uniform wearing-out and hence, the service life of the tyre itself and its reliable performance throughout the passage of time.

A tyre according to the preamble of claim is known, e.g. from GB—A—2046188.

The Applicant has now invented a new way of designing and disposing said blocks, that has revealed to be especially efficacious in obstaculating this type of wearing out from taking place, not to mention its developing, and in finding a remedy for the drawbacks reported by the known tread patterns.

Hence, the aim of the present patent is a new tread pattern—of the directional type, for tyres that are intended to be utilized on high-powered cars which are capable of running at very high speeds.

Therefore, what forms the object of the present patent of invention is a tyre for vehicle-wheels, comprising a substantially toroidal carcass, and a tread-band disposed in the crown zone (corona) of said carcass and destined for coming into ground-contact during tyre running, said tread-band presenting a plurality of sipes which define a raised pattern that is apt for improving the driving characteristics and the road-holding behaviour of the tyre under any whatsoever driving conditions, said tread pattern comprising a plurality of circumferential and transversal grooves that divide said tread-band substantially symmetrically, with respect to the equatorial plane of said tyre, into a plurality of blocks disposed in at least six circumferential adjacent rows, the axially transversal grooves which, delimit, one from the other, the blocks of the two axially innermost rows situated on opposite sides of said equatorial plane, being inclined in the contrary sense—with respect to the circumferential direction of the tyre—in each row with respect to the other row, said tyre being characterized by the fact that the transversal grooves that delimit the blocks of the remaining axially outermost rows are inclined in the contrary sense with respect to the sense of the adjacent axially innermost transversal grooves.

In a first form of realization of the invention, said tread-pattern comprises six circumferential rows of blocks, with the tread-band portion occupied by each row of axially outer blocks being substantially as wide as the flanking tread-band portion occupied by the adjacent pair of block-rows. As an alternative, said pattern could also comprise a continuous circumferential rib, disposed astride of the tyre's equatorial plane; or else, two continuous circumferential ribs disposed axially outwardly to the two inner circumferential rows. Preferably, the said ribs have a rectilinear layout, but they could also be designed to have a zig-zag configuration.

According to another embodiment, when said tread-pattern comprises an odd number of circumferential block-rows, the blocks of the central row are disposed astride the tyre's midplane and separated one from the other by transversal grooves that present—at their inlets, the same direction, for the grooves, as that of the adjacent row of blocks.

As far as concern the blocks themselves, it is feasible for the blocks of at least one pair of corresponding circumferential rows to have a rhomboidal surface, and/or for the blocks of at least one pair of the axially inner rows to have a rhombical surface.

For preference, the angle of inclination of the transversal grooves, with respect to the circumferential direction of the tyre, should be comprised between 40° and 75°; moreover, said angle of inclination of the transversal grooves, should diminish on passing from the axially outermost row to the axially inner row.

For preference, the transversal grooves are all symmetrically inclined with respect to the equatorial plane of the tyre and moreover, according to a further form of embodiment of the said tread-pattern, said transversal grooves all face one another.

The present invention will now be better understood through the aid of the following description and the attached figures—that are given solely by way of non-limiting example, whereby:

Fig. 1 shows the tread-pattern, according to the invention, in a first form of realization;

Fig. 2 illustrates in the tread-pattern, according to the invention, in the preferred form of embodiment;

Figs. 3 to 5 show further variations of realization for the tread pattern of the invention;

Fig. 6 shows the same tread pattern of Fig. 2, rotated to 180°.

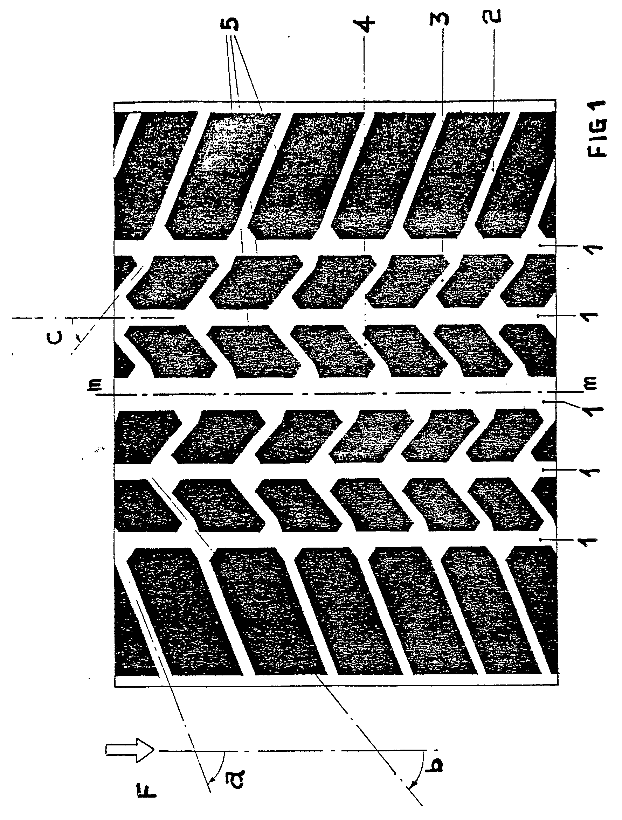

Fig. 1 illustrates a limited circumferential portion of the tread pattern, with of course it being clearly understood that said portion will be continually and substantially identically repeated throughout the entire perimetral layout of the tyre.

The said pattern presents five circumferential rectilinear grooves 1 and a plurality of transversal grooves 2, 3 and 4, that divide the tread-band into a plurality of blocks 5, disposed in six adjacent circumferential rows. In accordance with the invention, the transversal grooves 4, relative to the two axially innermost rows that are disposed on opposite sides with respect to the equatorial plane, the tyre midplane m-m, are inclined in the contrary sense, with respect to the said plane,—both with respect to each other as well as with respect to the inclination of the transversal grooves 2 and 3 relative to the remaining axially outermost rows.

Thus, the design results as being substantially symmetrical with respect to the mid-plane, but non-symmetrical with respect to any whatsoever axial plane. Hence, it is evident that the tyre is of the already described 'directional' type, that presents a preferential direction of rotation; so much so that even the tyre of the invention preferably carries indications on its sidewalls for the showing the mounting direction that is preferred—or even binding. It has to be specified here that said symmetry has not to be taken in the strictly geometrical sense, since, for the purpose of the invention, even those patterns have been considered to be symmetrical—wherein the inclination of the transversal grooves, in pairs of corresponding rows of blocks, differs from row to row, although still maintaining the same direction of inclination.

In particular, supposing one were to observe the tyre from the front, with determining with F (Fig. 1) the sense of rolling of the pattern, the tyre of the invention should preferably be mounted onto the vehicle, as seen in Fig. 1, on the driving-wheels, rotated to 180° on the driven-wheels.

The assembly of all the grooves, is drawn in such a way as to give origin to rhomboidal-shaped blocks—i.e. defined by pairs of substantially parallel facing sides and by the existence of an angle, with a value diverse from 90°, between two consecutive sides.

It must also be specified that concerning said rhomboidal form, this regards the more general global aspect of the blocks which moreover, present all those contrivances—such as, for example, the cutting-off of the sharp edges—which are necessary precautions for eliminating the risky phenomenon of priming too early a wear-and-tear and ripping and chipping of the said edges.

The dimensions of said blocks can of course vary along the perimetral layout of the tyre, particularly with the purpose of enhancing the noiseless condition of the tyre—by preventing any such bothersome phenomena as having an acoustic resonance.

The inclination of the transversal grooves of the block-rows, which forms the main object of the present invention, can be identical in all of the rows, but in the diverse rows it can also present the angles a, b, c as being slightly different one from the another. Preferably (as shown in the Figures) said angles diminish in their values—with respect to the equatorial plane of the tyre, as they pass from the axially outer rows to the axially inner ones.

The value of the angle of inclination of said grooves, is preferably comprised between 40° and 75°, with the angular variation, between the angles of inclination in any two adjacent rows, not exceeding 20°.

Moreover, all the transversal grooves result as facing one another—for the purpose of favouring the flow of water and for improving the resistance to the aquaplane phenomena.

In this version, the blocks on the tyre shoulder are very massive, with having their transversal dimensions substantially equal to the tread portion on either side, wherein there are comprised the furthest two circumferential rows of the axially inner blocks.

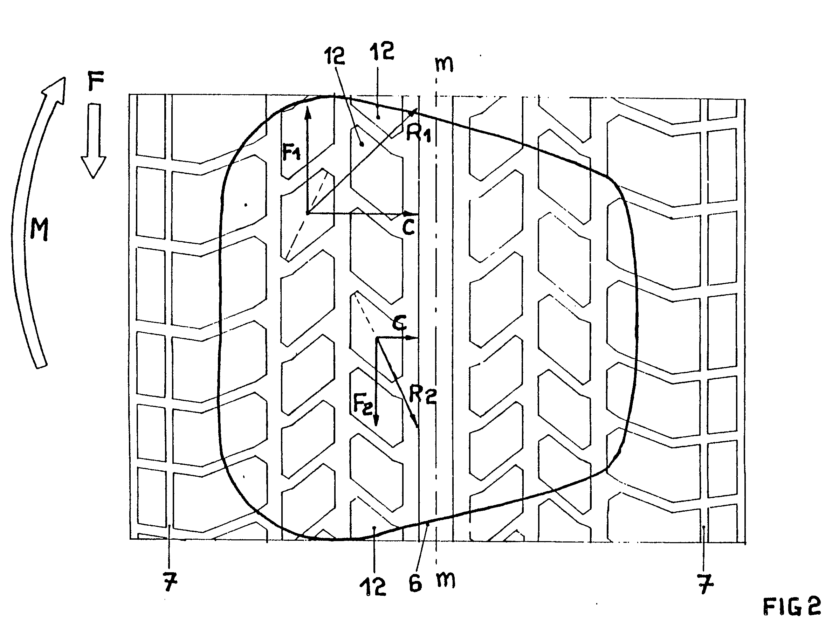

Fig. 2 shows the preferred form of realization of the tyre of the invention; the essential characteristic of the reciprocal inclination of the transversal grooves is evidently present even in this version—where the angles a, b c respectively, have the values of 68°, 50° and 50°, and wherein there nevertheless appear certain variations of realization that have allowed to perfect said tyre even better.

In the first place the circumferential grooves are now eight in number—with respect to the five-grooves version previously illustrated. In fact, in-between the two axially innermost rows, there has now been realized a narrow rectilineal circumferential rib 6, disposed astride of the midplane m—m, which has originated a new circumferential groove. Moreover, a further circumferential groove 7 has been made in each row of the axially outer blocks.

Besides this, even the form itself, of the blocks in the outer rows, has been modified by varying the trajectory of the respective transversal grooves.

These grooves now result as being comprised by a broken-line whose constituting-sections have diverse slants. The angle-zone substantially corresponds with the outer edge of the tyre's contact area. The axially inner groove portion maintains the inclination pre-established by the invention, while the axially outer groove portion may have the same sense of direction—but with a diverse inclination, or else, it may even have a contrary sense (as is illustrated in the Figures) with respect to the axial direction. Finally, it may also be inclined in a substantially axial direction—as will be explained further on in this text.

The form of the axially outer blocks is now seen as two diverse axially adjacent joined-together rhomboidal blocks, substantially having the same surface area, whereby the axially outer block results as being further sub-divided, by the axially outermost circumferential groove 7, into two almost equal blocks.

The blocks of the axially inner rows have been slightly modified by acquiring a substantially rhombical form. Said difference, with respect to the previous substantially rhomboidal form, being determined by the fact that the blocks' sides now all have more or less the same dimensions.

In this design, the transversal grooves have also been staggered to one another in each row, for the purpose of improving the noiselessness in the vehicle during tyre running.

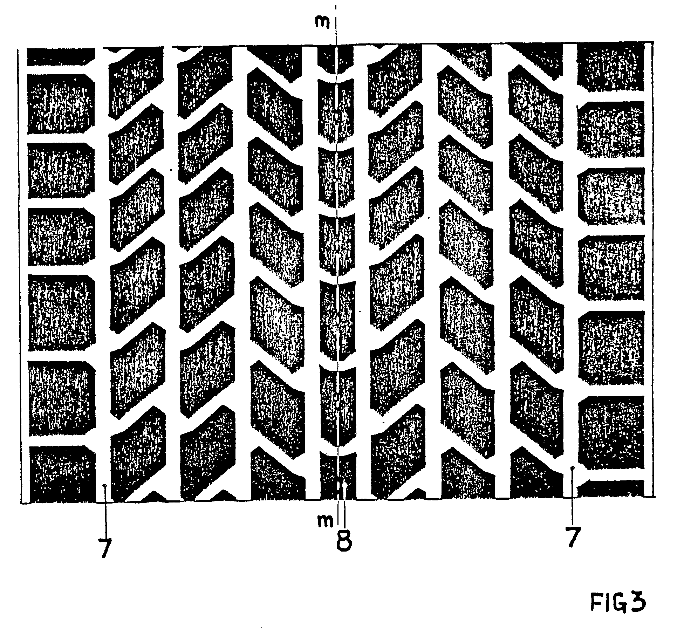

Let us now pass on to Fig. 3. Said Figure illustrates a further variation of realization in the design of the invention, which differs from that of Fig. 2 owing substantially to the fact that the axially outermost groove 7 has been bought into correspondence with the previously-mentioned angle of the broken-line, with thus creating eight circumferential rows of blocks having substantially equal surfaces. The six axially inner rows are those which correspond to the tyre's contact area—i.e. the rows which, during straightaway driving, usually come into contact with the road; whereas the two axially outermost rows—disposed in the zone where the tread-band curves towards the tyre shoulders, only come occasionally into ground-contact, in particular when the vehicle is cornering.

The transversal grooves of the axially inner rows, are all inclined with respect to the tyre's circumferential direction; whereas the grooves relative to the two axially outermost rows, are perpendicular to said direction—i.e. they are parallel to the axis of the tyre.

Evidently, as far as concern the rows of axially outer blocks, since the transversal grooves are substantially disposed at 90° with respect to the circumferential direction of the tyre, these blocks acquire a square or rectangular form.

Besides this, the continuous circumferential rib, disposed on the tyre's mid-plane, has been sub-divided into a row of circumferential blocks 8, one separated from the other by transversal grooves which present—at the two inlets facing towards the two axially innermost rows of circumferential blocks, the same inclination as that of the transversal grooves dividing these latter.

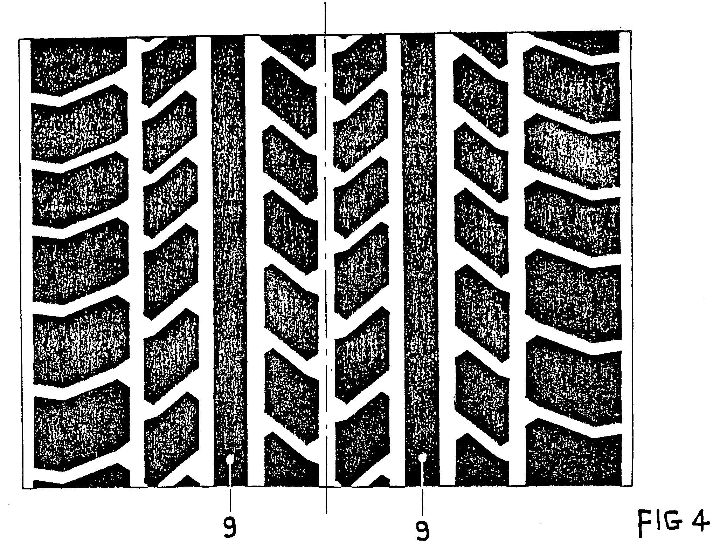

Fig. 4 illustrates a further variation in realization for the design of the invention that, substantially speaking, is so obviously self-evident as not to require any complicated explanations, nor any particular reference numerals either.

In particular, said design results as being characterized by the presence of two rectilineal, continuous circumferential ribs 9, that separate the two axially innermost rows from the remaining rows of blocks. After the insertion of these two ribs, the tyre's shoulder zone results as being modified—through the elimination of the two axially outermost rows of narrow, quasi-rectangular blocks, as seen illustrated in the above-said Fig. 2.

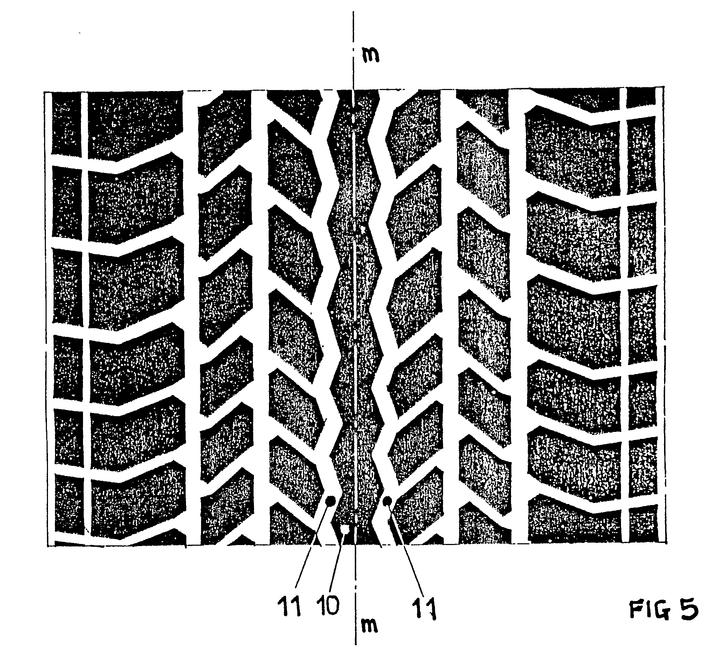

To end with, as illustrated in Fig. 5, the continuous circumferential ribs (previously indicated in Figs. 2 and 4) could also have a zig-zag configuration (just as that of rib 10) instead of a rectilinear one. In said instance, it will result as being preferable to also modify the profile of the blocks on the side facing said ribs, in such a way as to regularize the layout of the width of the corresponding circumferential groove 11.

However, from all the cited Figures, what appears as being quite clear is the main characteristic of the invention—as represented by the condition that, at least in the contact area, and with respect to the equatorial mid-plane, the transversal grooves of the two axially innermost rows of blocks are inclined in the contrary sense to each other, as well as with respect to the inclination of the transversal grooves in the remaining rows of the corresponding tread portion.

As it has already been stated, with reference to the tyres made with 'blocks', as those destined for being used on vehicles endowed with an exceptionally high horsepower and speed, and even those tyres wherein the transversal grooves are all inclined, in the same sense, or else in the contrary sense, in the two tread portions disposed on opposite sides with respect to the equatorial plane, these tyres show, under critical conditions of exercise, an uneven type of wearing-out that is initiated only on the blocks of one part of the tyre and just in a surface position of each block; said wearing-out negatively and drastically influences the service-life of the tyre.

With the tyre of the invention, the Applicant has discovered that said uneven wearing-out is substantially eliminated—which fact hence, guarantees the tyre life till the entire tread becomes worn-out.

For understanding how this improvement was probably attained, one can consider Fig. 2—with supposing that the tyre is mounted on a driving wheel, the left-hand sidewall being the outer one of the vehicle, and proceeding in the forwards direction M (in the contact area) along a curvilinear path that is inclined towards the angle on the upper-right of the Figure-table and viewed from below—i.e. with the surface of the blocks lying in the contact area.

In other words, the lower side of the design represents the tyre's entry into the contact area, and the upper side represents the tyre's exit from the same area.

We should also suppose that the tyre is subjected to a torque. Under said running conditions, the contact area substantially results as being shifted to the axially outer portion of the tyre—and the blocks, in the contact area are subjected to a longitudinal reaction $F1$, and to the centripetal force $C$ that acts upon the vehicle, these latter both combining together to produce $R1$ as a resultant force.

Obviously, and in order to have low wearing-out values for the blocks, the latter should be oriented so as to have their greater diagonal substantially according to $R1$. This is the reason why the herring-bone type of disposition for the blocks is used in the more recent known tyres.

Nevertheless, said type of disposition has proved to have certain drawbacks. Above all, when the motive couple is lacking, or even if a braking couple is applied, the longitudinal reaction $F1$ on the block either annuls or inverts the direction, with originating the reaction $F2$; while the centripetal force $C$ diminishes in value but maintains its direction, so much so that the direction of the resultant force $R2$ sensibly changes—with thus resulting as being disposed substantially according to the lesser diagonal of the said blocks.

In this direction, the block presents a low rigidity and hence, it wears out very rapidly as, for that matter, road-performance tests have shown.

Since the blocks of the known tyres are all disposed to have the same orientation with respect to the travelling direction of the tyre, their actual resistance capacity is substantially identical—for which reason they also wear out more or less together.

Moreover, the direction of the grooves—that converge towards the centre of the tread, is such as to accumulate the water that is present on the road, in the front part and centre of the tyre—with this fact hence rendering the tyre very sensible to the aquaplane phenomena.

There are multiple advantages to be had with the tyre of the invention—but, in a particular way, it has surprising demonstrated its ability to overcome the above-said drawbacks, thanks precisely to the axially innermost row of blocks 12 that is oriented in the contrary sense (see Fig. 2).

In fact, with regard to the wearing-out—under riding conditions with the vehicle accelerating speed when cornering, it may be thought that the block 12, oriented in the direction of lesser resistance, would deteriorate quite rapidly. On the other hand, this lesser resistance loads the greater part of its frictional force upon the axially outermost rows, so much so that the block 12 demonstrates to be efficaciously protected against any such precocious and uneven wearing-out.

Vica-versa, when the acceleration is modest or completely lacking, then the blocks of the said axially innermost row result as being oriented according to the direction of maximum resistance—so much so that it is these blocks now, that absorb the maximum part of the frictional force loaded upon the tread pattern, with efficaciously preserving the blocks of the outermost rows from any uneven or precocious wearing out.

Given that this last mentioned condition of exercise is considerably less heavy when compared to the previous one, in practice a single row of blocks in each mid-plane of the tread-band can absorb the maximum force that is exercised on the tread—whereas at least two rows of blocks are necessary under the previous 'extreme conditions' of tyre running.

Finally, as far as regards the aquaplane, the inclination of the grooves of the above-said row of axially innermost blocks, is such as to push the water collected (when travelling on the road) towards the tyre shoulders, so much so that any accumulation of water under the central tread-portion is impeded; while the combined action of the transversal grooves, having a contrasting slant, is such as to push the water along the circumferential grooves, resulting in a beneficial effect with respect to 'road-gripping' capacity of the tyre of the invention, when travelling on wet roads.

Said benefit results as being further accentuated in the presence of the rib, or of the continuous circumferential ribs—that create a physical separation between the two flow currents of water.

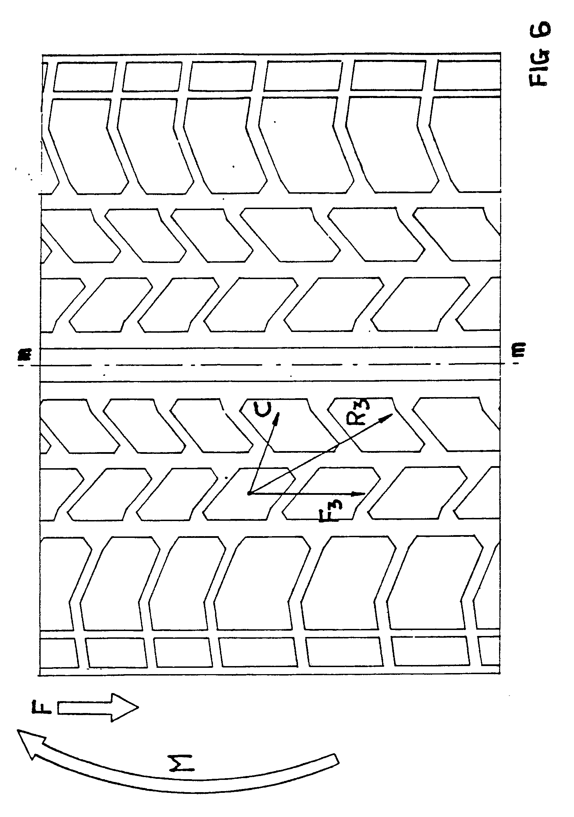

If we now consider the driven-wheels, a motive couple can never result as being applied on these—so that the longitudinal reaction $F3$ is always directed in the opposite sense with respect to $F1$, at a parity of the direction of movement. This situation is illustrated in Fig. 6, where the same reference numerals $N$ and $F$ are maintained with regard to the advancing direction and the path of the vehicle.

It is evident, on considering the just specified orientation of $F3$, that the optimal situation will be had when the rows of the axially outer blocks present their transversal grooves as being inclined in the contrary sense, with respect to the orientation they have in Fig. 2. This optimal orientation is obtained, without any problem, by simply mounting the tyre rotated to 180° on the driven-wheels—with respect to the mounting effected on the driving-wheels, as can immediately be verified on comparing Fig. 2 and said Fig. 6—which moreover, is nothing but the previous Fig. 2 rotated in such a way that the lower part now becomes the upper part and vice-versa.

**Claims**

1. Tyre, for vehicle wheels, comprising a substantially toroidal carcass and a tread-band disposed in the crown of said carcass and destined for coming into ground-contact during tyre running, said tread-band presenting a plurality of sipes which define a raised pattern that is apt for improving the driving characteristics and the road-holding behaviour of said tyre under any whatsoever driving conditions, said pattern comprising a plurality of circumferential (1) and transversal grooves (2, 3, 4) that divide said tread-band substantially symmetrically with respect to the equatorial plane (m—m) of said tyre, into a plurality of blocks (5) disposed in at least six circumferential, adjacent rows, the axially innermost transversal grooves (4), which delimit, one from the other, the blocks of the two axially innermost rows situated on opposite sides of said equatorial plane, being inclined in the contrary sense—with respect to the circumferential direction of the tyre—in each row with respect to the other row, said tyre being characterized by the fact that the transversal grooves (2, 3) that delimit the blocks of the remaining axially outermost rows are inclined in the contrary sense with respect to the sense of the adjacent axially innermost transversal grooves (4).

2. Tyre, according to Claim 1, characterized by the fact that said pattern comprises six circumferential rows of blocks, the tread portion occupied by each row of axially outer blocks, being substantially as wide as the adjacent portion of tread occupied by the adjacent pair of rows of blocks.

3. Tyre, according to Claim 1, characterized by the fact that said pattern presents eight circumferential rows of blocks.

4. Tyre, according to Claim 1, characterized by the fact that the blocks, of at least one pair of corresponding circumferential rows, have a substantially rhomboidal form.

5. Tyre, according to Claim 1, characterized by the fact that the blocks, of at least one pair of corresponding axially inner rows, have a substantially rhomboidal form.

6. Tyre, according to Claim 1, characterized by the fact that the angle of inclination (a, b, c) of the transversal grooves, with respect to the circumferential direction of the tyre, is comprised between 40° and 75°.

7. Tyre, according to Claim 6, characterized by the fact that said angle of inclination of the transversal grooves, diminishes in proceeding axially from outside towards inside.

8. Tyre, according to Claim 1, characterized by the fact that the transversal grooves (2) which delimit the blocks in the axially outermost row, are directed in the axial sense.

9. Tyre, according to Claim 1, characterized by the fact that the transversal grooves of the axially outermost rows, have a broken-line trajectory, the axially innermost groove portion being inclined, with respect to the equatorial plane of the tyre, in the same sense as the grooves of the adjacent row.

10. Tyre, according to Claim 1, characterized by the fact that the transversal grooves of the corresponding rows, on opposite sides of the tyre's equatorial plane, are inclined symmetrically with respect to said plane.

**Patentansprüche**

1. Reifen für Fahrzeugräder, umfassend eine im wesentlichen toroidförmige Karkasse und einen Laufstreifen, der in der Krone der Karkasse angeordnet und dazu bestimmt ist, während des Laufens des Reifens mit dem Boden in Berührung zu gelangen, wobei der Laufstreifen eine Mehrzahl von Sicken oder Rillen aufweist, die ein erhöhtes Muster definieren, welches in der Lage ist, die Antriebscharakteristiken und das Strassenhaftverhalten des Reifens unter irgendwelchen Antriebsbedingungen zu verbessern, das Muster eine Mehrzahl von Umfangsrillen (1) und Querrillen (2, 3, 4) umfaßt, welche den Laufstreifen mit bezug auf die Äquatorialebene (m—m) des Reifens im wesentlichen symmetrisch in eine Mehrzahl von Blöcken (5) unterteilen, die in wenigstens sechs benachbarten Umfangsreihen angeordnet sind, und wobei die axial innersten Querrillen (4), welche die Blöcke der beiden axial innersten Reihen, die auf gegenüberliegenden Seiten der Äquatorialebene liegen, gegeneinander abgrenzen, mit Bezug auf die Umfangsrichtung des Reifens in jeder Reihe mit Bezug auf die andere Reihe im entgegengesetzten Sinn schräg verlaufen, dadurch gekennzeichnet, daß die Querrillen (2, 3), welche die Blöcke der verbleibenden axial äußeren Reihen begrenzen, mit Bezug auf den Sinn der benachbarten axial innersten Quernuten (4) in entgegengesetztem Sinn schräg verlaufen.

2. Reifen nach Anspruch 1, dadurch gekennzeichnet, daß das Muster sechs Umfangsreihen von Blöcken umfaßt und der Laufstreifenteil, der von jeder Reihe von axial äußeren Blöcken eingenommen wird, im wesentlichen so breit ist wie der benachbarte Teil des Laufstreifens, der von dem benachbarten Paar von Reihen von Blöcken eingenommen ist.

3. Reifen nach Anspruch 1, dadurch gekennzeichnet, daß das Muster acht Umfangsreihen von Blöcken darbietet.

4. Reifen nach Anspruch 1, dadurch gekennzeichnet, daß die Blöcke wenigstens eines Paares von entsprechenden Umfangsreihen eine im wesentlichen rhombische Form haben.

5. Reifen nach Anspruch 1, dadurch gekennzeichnet, daß die Blöcke wenigstens eines Paares von entsprechenden axial inneren Reihen eine im wesentlichen rhombische Form haben.

6. Reifen nach Anspruch 1, dadurch gekennzeichnet, daß der Schrägwinkel (a, b, c) der Querrillen mit bezug auf die Umfangsrichtung des Reifens zwischen 40° und 75° liegt.

7. Reifen nach Anspruch 6, dadurch gekennzeichnet, daß der Schrägwinkel der Querrinnen beim achsialen Fortschreiten von außen nach innen sich verkleinert.

8. Reifen nach Anspruch 1, dadurch gekennzeichnet, daß die Querrillen (2), welche die Blöcke in der axial äußersten Reihe begrenzen, in achsialem Sinn gerichtet sind.

9. Reifen nach Anspruch 1, dadurch gekennzeichnet, daß die Querrillen der axial äußersten Reihen eine Bahn in Form einer unterbrochenen Linie haben, und der axial innerste Rillenteil mit Bezug auf die Äquatorialebene des Reifens in dem gleichen Sinn wie die Rillen der benachbarten Reihe schräg verläuft.

10. Reifen nach Anspruch 1, dadurch gekennzeichnet, daß die Querrillen der entsprechenden Reihen auf gegenüberliegenden Seiten der Äquatorialebene des Reifens mit Bezug auf diese Ebene symmetrisch schräg verlaufen.

**Revendications**

1. Pneumatique, pour roues de véhicules comprenant une carcasse à peu près toroïdale et une bande de roulement disposée dans la zone de sommet (ou de couronne) de ladite carcasse et destinée à entrer en contact avec le sol pendant le roulement du pneumatique, ladite bande de roulement présentant une pluralité de rainures qui définissent une sculpture en relief qui est apte à améliorer les caractéristiques de conduite et le comportement de tenue de route du pneumatique dans n'importe quelles conditions de conduite, ladite sculpture de bande de roulement comprenant une pluralité de rainures circonférentielles (1) et transversales (2, 3, 4) qui divisent ladite bande de roulement à peu près symétriquement par rapport au plan équatorial dudit pneumatique, en une pluralité de blocs (5) disposés en au moins six rangées circonférentielles adjacentes, les rainures transversales (4) axialement les plus intérieures qui délimitent, l'un de l'autre, les blocs des deux rangées axialement les plus intérieures qui sont situées de part et d'autre du plan équatorial, étant inclinées dans chaque rangée dans le sens inverse du sens de l'autre rangée dans la direction circonférentielle du pneumatique, ledit pneumatique étant caractérisé par le fait que les rainures transversales (2, 3) qui délimitent les blocs des rangées restantes, axialement les plus extérieures, sont inclinées dans le sens inverse du sens des rainures transversales (4) axialement les plus intérieures qui leur sont adjacentes.

2. Pneumatique selon la revendication 1, caractérisé en ce que ladite sculpture comprend six rangées circonférentielles de blocs, la portion de la bande de roulement qui est occupée par chaque rangée de blocs axialement extérieurs étant sensiblement aussi large que la portion adjacente de la bande de roulement, qui est occupée par la paire adjacente de rangées de blocs.

3. Pneumatique selon la revendication 1, caractérisé en ce que ladite sculpture présente huit rangées circonférentielles de blocs.

4. Pneumatique selon la revendication 1, caractérisé en ce que les blocs d'au moins une paire de rangées circonférentielles correspondantes possède une forme sensiblement rhomboïdale.

5. Pneumatique selon la revendication 1, caractérisé en ce que les blocs d'au moins une paire de rangées axialement intérieures correspondantes ont une forme sensiblement rhomboïdale.

6. Pneumatique selon la revendication 1, caractérisé en ce que l'angle d'inclinaison (a, b, c) des rainures transversales par rapport à la direction circonférentielle du pneumatique est comprise entre 40° et 75°.

7. Pneumatique selon la revendication 6, caractérisé en ce que ledit angle d'inclinaison des rainures transversales décroît lorsqu'on se déplace axialement de l'extérieur vers l'intérieur.

8. Pneumatique selon la revendication 1, caractérisé en ce que les rainures transversales (2) qui délimitent les blocs de la rangée axialement la plus extérieure sont dirigées dans le sens axial.

9. Pneumatique selon la revendication 1, caractérisé en ce que les rainures transversales des rangées axialement les plus extérieures ont un tracé en ligne brisée, la portion axialement la plus intérieure de la rainure étant inclinée par rapport au plan équatorial du pneumatique, dans le même sens que les rainures de la rangée adjacente.

10. Pneumatique selon la revendication 1, caractérisé en ce que les rainures transversales des rangées correspondantes, de part et d'autre du plan équatorial du pneumatique, sont inclinées symétriquement par rapport audit plan.

FIG 1

FIG 2

FIG 3

FIG 4

m

11  10  m  11

FIG 5

FIG 6